(19) Europäisches Patentamt
European Patent Office
Office européen des brevets

(11) EP 4 703 427 A1

(12) EUROPEAN PATENT APPLICATION

(43) Date of publication:
**04.03.2026 Bulletin 2026/10**

(21) Application number: **24196520.1**

(22) Date of filing: **26.08.2024**

(51) International Patent Classification (IPC):
***C08L 23/12*** *(2006.01)* ***C08F 110/06*** *(2006.01)*
***B65D 75/00*** *(2006.01)*

(52) Cooperative Patent Classification (CPC):
(C-Sets available)
**C08F 110/06; C08L 23/12;** C08F 4/65908;
C08F 4/65912; C08F 4/65916; C08L 2203/162;
C08L 2205/025; C08L 2314/02; C08L 2314/06
(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **CARMELI, Enrico**
**4021 Linz (AT)**
- **WANG, Jingbo**
**4021 Linz (AT)**
- **GAHLEITNER, Markus**
**4021 Linz (AT)**
- **KAYNAK, Baris**
**4021 Linz (AT)**
- **CAVACAS, Paulo**
**2800 Mechelen (BE)**
- **BOXUS, Emmanuel**
**3583 Beringen (BE)**
- **KOLLNBERGER, Natalie**
**4021 Linz (AT)**

(74) Representative: **Maikowski & Ninnemann Patentanwälte Partnerschaft mbB**
**Postfach 15 09 20**
**10671 Berlin (DE)**

(54) **CAST FILM CONSISTING OF A POLYPROPYLENE COMPOSITION**

(57) The invention relates to a cast film consisting of a polypropylene composition comprising a) at least 90 wt.-% (based on the overall weight of the polyolefin composition) of at least one first polypropylene homopolymer (PPH-1) having a molecular weight distribution index Mw/Mn measured by GPC (according to ISO 16014-4:2003 and ASTM D 6474-99) in the range of 2.0 to 5.0, a $MFR_2$ (ISO1133, 2.16 kg load at 230 °C) between 1.0 and 15 g/10 min, a sum of 2,1-insertion in the range of 0.3 to 1.5 mol% (determined by $^{13}C$ nuclear magnetic resonance (NMR) spectroscopy), b) 0.1 - 10 wt.-% (based on the overall weight of the polyolefin composition) of at least one second polypropylene (PPH-2) having a $MFR_2$ (ISO1133, 2.16 kg load at 230 °C) between 0.5 and 20 g/10 min, a melting point determined by differential scanning calorimetry (DSC, ISO ISO 11357 / part 3 / method C2) of at least 160 °C and a crystallization point (DSC) of at least 120°C, c) optionally at least one additive, wherein the sum of all ingredients always adds up to 100 wt.-%. The invention relates also to the use of said cast film in pharmaceutical packaging systems.



Processed by Luminess, 75001 PARIS (FR)

(Cont. next page)

(52) Cooperative Patent Classification (CPC): (Cont.)

C-Sets
**C08F 110/06, C08F 2/001;**
**C08F 110/06, C08F 4/6492;**
**C08F 110/06, C08F 4/651;**
**C08F 110/06, C08F 4/65927;**
**C08L 23/12, C08L 23/12, C08K 5/098;**
C08F 110/06, C08F 2500/26, C08F 2500/12,
C08F 2500/35, C08F 2500/34, C08F 2500/33

## Description

The present invention is directed to a cast film consisting of a polypropylene composition and the use of said cast film in pharmaceutical packaging systems.

## Description

Push Through Packaging (PTP) is a packaging form in which contents such as pharmaceuticals and foods are stored in a pocket created by thermoforming a plastic sheet, and an aluminum foil coated with adhesive is heat-sealed so as to seal the opening. The contents such as medicines and foods are taken out by pressing the pocket portion with a finger from the outside and pushing the foil with the contents.

The PTP packaging sheet used for PTP packaging should be transparent so that the state of the contents can be confirmed, should provide a barrier against water vapor to ensure the quality of the contents, should be thermoformable for molding according to the shape of the contents, and should have a certain stiffness to retain the shape of the formed cavities during storage.

Following the current industry needs and trends, packaging in pharmaceutical industry is also heavily focused on providing easily recyclable packaging for products. In particular, pharmaceutical blister packaging has gained a special attention in the recent years in Europe, as in many of them the material on the blister side is polyvinyl chloride (PVC), polyvinylidene chloride (PVDC) or fluoropolymers, while the push-through closure is made of aluminum, which essentially prevents them from being mechanically recycled. Being on the market for many years, these structures do not really have an ideal design; for instance the aluminum layer has issues with sealing with the PVC-based layer. An additional sealant layer must be present between those two layers in order to strengthen the sealing; which in the end causes the recycling to be even more complicated, and increases costs for production. In addition, the high moisture penetration capability of PVC makes it also a less-attractive material for pharmaceutical blister packaging, since it becomes challenging to preserve the content in the packaging free from any contamination.

Alternative materials to PVC-based blisters can be polyolefins, and in particular polypropylene (PP). However, it is known that for semicrystalline polymers like PP having good thermoforming ability and low water vapor transmission rate (WVTR) at the same time is a challenge.

An example on use of PP in blister application is reported in JP 5249797 B2, which refers to a (push-through) packaging sheet having a single-layer structure, comprising a propylene homopolymer (A) having a sum of 1,3-intercalated bonds of 0.2 mol % or less polymerized using a metallocene catalyst system, and a petroleum resin, the melt flow rate is 0.1 to 10 g/10 min, the melting point measured by Differential Scanning Calorimeter (DSC) is in the range of 155 to 167 °C, and the amount of 2,1-insertion bond of propylene is 0.5 mol% or less. However, a petroleum resin is added to the propylene homopolymer used as a layer in the PTP packaging system, making this system not compliant to the European Pharmacopoeia that regulates the composition of the blister film.

It must be stressed that most of the packaging manufactures have only experience with PVC-based materials, which are notoriously easy to thermoform above the glass transition temperature of PVC. Therefore, any improvement in the ability of a film to be thermoformed by either starting at lower temperature or by broadening the temperature window of thermoforming is appreciated by converters.

At the same time, the sealing behavior against the lid film should not be overlooked, especially when using a recyclable lid film. In fact, while the use of the standard aluminum lid film allows to apply high sealing temperatures (-180 °C) which ensure tight sealing, polymeric lid films have a sealing window that is limited by the melting point of the polymer itself. PP-based lid films are already developed and available on the market, thus they should be used to evaluate the sealing behavior of PP-based blister films.

The two main requirements for a successful blister film are low water vapor transmission rate (WVTR) combined with a sufficient ability to be thermoformed. In this respect, the crystalline phase of the polymer is usually the driver property in a monolayer system. However, the challenge is that a high crystallinity level in the material would be responsible for lower WVTR, but can dramatically decrease the thermoforming window, while lower crystallinity favors thermoformability at the expense of water barrier properties. At the same time a good sealing behavior should be maintained making the whole blister packaging fully recyclable.

It was therefore an object of the present invention to provide polypropylene homopolymers that can fulfill these requirements with a better performance for the application in PTP packaging systems, while fulfilling the European Pharmacopoeia regulation.

This object has been solved by providing a polypropylene composition for use as a cast film with the features as described in the claims.

Accordingly, a polypropylene composition for a cast film is provided, wherein the polypropylene composition comprises

a) at least 90 wt.-% (based on the overall weight of the polypropylene composition) of at least one first polypropylene homopolymer (PPH-1) having

a molecular weight distribution Mw/Mn measured by GPC (according to ISO 16014-4:2003 and ASTM D 6474-99) in the range of 2.0 to 5.0,
a $MFR_2$ (ISO1133, 2.16 kg load at 230 °C) between 1.0 and 15g/10 min, and
a sum of 2,1-insertion (or 2,1-erythro-regio-defects) in the range of 0.3 to 1.5 mol% as determined by $^{13}C$ nuclear magnetic resonance (NMR) spectroscopy,

b) 0.1 - 10 wt.-% (based on the overall weight of the polyolefin composition) of at least one second polypropylene (PPH-2) having

a $MFR_2$ (ISO1133, 2.16 kg load at 230 °C) between 0.5 and 20 g/10 min,
a melting point determined by differential scanning calorimetry (DSC, ISO11357 / part 3 / method C2) of at least 160 °C and a crystallization point (DSC) of at least 120 °C,

c) optionally at least one additive, wherein the sum of all ingredients always adds up to 100 wt.-%,

As will be discussed in further detail below, the polypropylene homopolymer PPH-1 used in the present polypropylene composition is obtained from a single-site catalyst (SSC-PP) and the polypropylene homopolymer PPH-2 is obtained by polymerization on a catalyst modified with a polymeric nucleating agent.
The cast film obtained from said polypropylene composition in addition to abroad thermoforming window shows a reduced water vapor transmission rate (WVTR), a low minimum sealing temperature and good mechanical and optical properties.
In an embodiment of the cast film, the polypropylene composition comprises

a) at least 92 wt.-% (based on the overall weight of the polyolefin composition), preferably at least 95 wt.-%, more preferably at least 97 wt.-% of at least one polypropylene homopolymer (PPH-1),

b) 0.2- 8.0 wt.-%, preferably 0.3 - 5.0 wt.-%, more preferably 0.5 - 3.0 wt.-% (based on the overall weight of the polyolefin composition) of at least one second polypropylene (PPH-2), and

c) optionally at least one additive, wherein the sum of all ingredients always adds up to 100 wt.-%.

In an embodiment of the cast film, the polypropylene composition comprises less than 0.5 wt.-% additives, in particular less than 0.5 wt.-% antioxidants, more in particular less than 0.3 wt.-% antioxidants, with the at least two polypropylene homopolymer being the remainder adding up to 100 wt.-%.
In the following the invention is defined in more detail.

## Polypropylene composition and cast film obtained therefrom

The polypropylene composition according to the invention has been tailored to be suited for the manufacture of cast films.
Accordingly, the polypropylene composition has an $MFR_2$ (ISO1133, 2.16 kg load at 230 °C) between 1.0 and 15 g/10 min; preferably between 1.5 and 10 g/10 min, more preferably between 1.8 and 8.0 g/ 10min, still more preferably between 2.0 and 6.0 g/10 min, even still more preferably between 2.5 and 5.0 g/10 min; like between 3.0 and 4.0 g/10 min.
In an embodiment, the polypropylene composition has a xylene cold soluble (XCS) content determined according to ISO 16152 at 25°C based on the overall weight of polypropylene composition of less than 2.5 wt.%, preferably of less than 2.0 wt.-%, more preferably of less than 1.5 wt.-%, in particular in the range of 0.1 to 2.4 wt.-%; preferably in the range of 0.2 to 2.0 wt.-%, more preferably in the range of 0.2 to 1.5 wt.-%, more preferably in the range of 0.2 to 1.0 wt.-%for example in the range of 0.3 to 0.8 wt.-%, particular in the range of 0.3 to 0.5 wt.-%.
In an embodiment, the polypropylene composition has a melting temperature ($T_m$) (measured according to ISO 11357 / part 3 / method C2) in the range of 150 °C to 165 °C, preferably in the range of 153 °C to 162 °C, more preferably in the range of 154 °C to 160 °C.
In a further embodiment, the polypropylene composition has a crystallization temperature ($T_c$) (measured according to ISO 11357 / part 3 / method C2) in the range of 118 °C to 135°C, preferably in the range of 120 °C to 130°C, more preferably in the range of 120°C to 125°C, such as in a range of 122°C to 124°C..
In still a further embodiment, the polypropylene composition has a difference between melting and crystallization

temperature, Tm - Tc, in a range of 25 to 45 °C, preferably in a range of 28 to 42°C.

As mentioned, the polypropylene composition can be used for obtaining a cast film that will be used in pharmaceutical packaging systems, in particular tablet blisters.

The film according to the present invention may be produced via cast film process, where the molten polymer is passed through a flat die and the film is extruded, followed by a cooling step.

In an embodiment, the cast film (in particular a 300 μm thick cast film) obtained from the polypropylene composition may have a haze (measured according to ASTM D 1003-00) in a range of 8 to 28%, preferably in a range of 10 to 25%, more preferably in a range of 15 to 22 %even more preferably in a range of 16 to 20%.

In another embodiment, the cast film (in particular a 300 μm thick cast film) from the polypropylene composition has a tensile modulus in machine direction (ISO 527-3) of at least 800 MPa, preferably of at least 1000 MPa, more preferably of at least 1100 MPa, in particular in a range between 800 and 1500 MPa, more in particular in a range between 1000 and 1300 MPa, even more preferably in a range between 1100 and 1250 MPa.

In yet a further embodiment, the cast film (in particular a 300 μm thick cast film) from the polypropylene composition has a crystallinity (as determined by wide angle X-ray Scattering measurement (WAXS) as provided in the description) in a range of 45 to 75%, preferably in a range of 50 to 70%, more preferably in a range of 56 to 68%, even more preferably in a range of 58 to 67%.

Still further, the cast film (in particular a 300 μm thick cast film) from the polypropylene composition has a water vapor transmission rate (WVTR, at 38°C 90%RH as determined according to ISO 15106-3:2003 on a 300μm cast film) of less than 0.68 $g/m^2$ day, preferably of less than 0.65 $g/m^2$ day, more preferably of less than 0.63 $g/m^2$ day, in particular in a range of 0.30 to < 0.68 $g/m^2$ day, more particular in a range of 0.35 to < 0.65 $g/m^2$ day, even more particular in a range of 0.40 to < 0.63 $g/m^2$, still more particular in a range of 0.45 to < 0.63 $g/m^2$, such as in a range of 0.50 to 0.60 $g/m^2$, particular from 0.57 to 0.60 $g/m^2$ day.

In still a further embodiment, the cast film (in particular a 300 μm thick cast film) from the polypropylene composition has a thermoforming window in a range of 5 to 20 °C, preferably in a range of 7 to 18 °C, more preferably in a range of 8 to 15 °C.

A cast film, in particular a 300 μm thick cast film, from the present polypropylene composition may have also a lowest sealing temperature of less than 150 °C, preferably in a range between 135°C and less than 148°C, more preferably between 138°C and 145°C.

## First Polypropylene homopolymer (PPH-1)

The major part of the polypropylene composition used for the cast film is a first type of polypropylene homopolymer PPH-1.

Homopolymers are polymers that are made up entirely of just one monomeric compound; i.e. if the macromolecules consist of basic building blocks (monomers) of the same type, they are referred to as homopolymers.

As mentioned above, the first polypropylene homopolymer PPH-1 has an $MFR_2$ (ISO1133, 2.16 kg load at 230 °C) between 1.0 and 15.0 g/ 10min. In an embodiment, the at least one first polypropylene homopolymer (PPH-1) has an $MFR_2$ (ISO1133, 2.16 kg load at 230 °C) between 1.5 and 12.0 g/ 10min, preferably between 2.0 and 10.0 g/10 min, more preferably between 2.5 and 6.0 g/10 min, even more preferably between 2.5 and 4.5 g/10 min as in the range between 2.7 and 3.0 g/10 min,.

As also mentioned, the polypropylene homopolymer PPH-1 has a molecular weight distribution Mw/Mn or polydispersity (measured by GPC according to ISO 16014-4:2003 and ASTM D 6474-99) in the range of 2.0 to 5.0. In an embodiment, the polypropylene homopolymer PPH-1 may have a molecular weight distribution Mw/Mn in the range of 2.2 to 4.5, preferably in the range of 2.3 to 4.3, more preferably in the range of 2.5 to 4.0, even more preferably in the range of 2.8 to 3.5. still more preferably in the range of 2.8 to 3.5

The polypropylene homopolymer PPH-1 preferably has a weight average molecular weight Mw (measured by GPC according to ISO 16014-4:2003 and ASTM D 6474-99) in a range of 180 to 420 kg/mol, more preferably in a range of 200 to 400 kg/mol, even more preferably in a range of 220 to 380 kg/mol.

As further mentioned, the polypropylene homopolymer PPH-1 has a sum of 2,1-insertion or 2,1 erythro regio defects in the range of 0.3 to 1.5 mol%. In an embodiment, the at least one polypropylene homopolymer PPH-1 may have a sum of 2,1-insertion or 2,1 erythro regio defects in the range of 0.5 to 1.0 mol%, preferably in the range of 0.7 to 0.9 mol%, determined by $^{13}C$ nuclear magnetic resonance (NMR) spectroscopy.as described in the method section.

The polypropylene homopolymer PPH-1 is further preferably characterized by a melting point (Tm), as determined by differential scanning calorimetry (DSC, ISO 11357 / part 3 / method C2), in a range of 140 to less than 160 °C, preferably in a range of 145 to 159 °C, more preferably in a range of 148 to 158 °C, like in a range of 150 to 157°C.

The polypropylene homopolymer PPH-1 is further preferably characterized by a crystallization temperature (Tc), as determined by differential scanning calorimetry (DSC, ISO 11357 / part 3 / method C2), in a range of 105 to 118 °C, preferably in a range of 108 to 117 °C, more preferably in a range of 110 to 116 °C.

The synthesis of the at least one polypropylene homopolymer PPH-1 is now described (see also WO 2023/187145 A1).

The polypropylene homopolymer PPH-1 is produced with a metallocene catalyst. Preferably, the polypropylene homopolymer PPH-1 is produced in a sequential polymerization process using a specific metallocene catalyst. Accordingly, the polypropylene homopolymer PPH-1 is produced with a metallocene catalyst as disclosed in WO 2019/179959 A1.

The metallocene catalyst complexes used for the manufacture of the polypropylene homopolymer PPH-1 is in particular defined by formula (I):

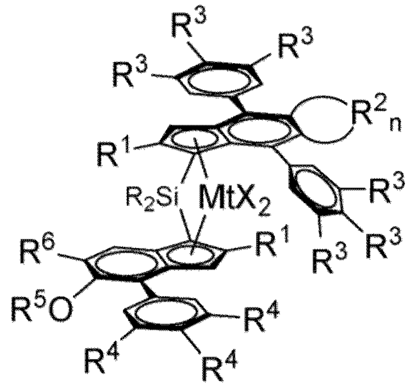

Formula (I)

In a complex of formula (I) it is preferred if Mt is Zr or Hf, preferably Zr; each X is a sigma ligand. Most preferably, each X is independently a hydrogen atom, a halogen atom, C1-C6 alkoxy group or an R' group, where R' is a C1-C6 alkyl, phenyl or benzyl group. Most preferably, X is chlorine, benzyl or a methyl group. Preferably, both X 20 groups are the same. The most preferred options are two chlorides, two methyl or two benzyl groups, especially two chlorides. For further preferred definitions of the residues, reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1-yl][2-methyl-4-(3',5'-dimethyl-phenyl)-5-methoxy-6-tert-butylinden-1-yl] zirconium dichloride (MC-1);
rac-anti -dimethylsilanediyl[2-methyl-4,8-bis-(3 ',5' -dimethylphenyl)-1 ,5,6, 7-tetrahydro-s-indacen-1-yl] [2-methyl-4-(3' ,5 '-dimethylphenyl)-5-methoxy-6-tertbutylinden-1 -yl] zirconium dichloride (MC-2);
rac-anti-dimethylsilanediyl[2-methyl-4,8-bis-(3',5'-dimethylphenyl)-1,5,6,7-tetrahydro-s-indacen -1-yl] [2-methyl-4-(3',5' -ditert-butyl-phenyl)-5-methoxy-6-tertbutylinden-1-yl] zirconium dichloride (MC-3)

The corresponding zirconium dimethyl analogues of the above defined three catalysts are also possible but less preferred. The most preferred catalyst is the one used for the inventive examples, i.e. MC-2.

To form an active catalytic species it is normally necessary to employ a cocatalyst as is well known in the art. Here, a cocatalyst system comprising a boron containing cocatalyst and an aluminoxane cocatalyst is used in combination with the above defined metallocene catalyst complex. Typical aluminoxane cocatalysts are state of the art. The preferred aluminoxane is methylaluminoxane (MAO). Since the aluminoxanes used as cocatalysts are not, owing to their mode of preparation, pure compounds, the molarity of aluminoxane solutions hereinafter is based on their aluminum content.

As mentioned above the aluminoxane cocatalyst is used in combination with a boron containing cocatalyst.

Boron based cocatalysts of interest include those of formula (Z)

BY3 (Z)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryllike phenyl, toluyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris( 4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl) borane. Particular preference is given to tris(pentafluorophenyl)borane.

Preferred ionic compounds which can be used include:

triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra( 4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri( dimethylphenyl)phosphoniumtetrakis(phenyl )borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,Ndimethylcyclohexylammoniumtetrakis(pentafluorophenyl)borate or N,N- Dimethyl-benzylammoniumtetrakis(pentafluorophenyl)borate.

Certain boron cocatalysts are especially preferred. Preferred borates comprise the trityl ion. Thus, the use of N,N-dimethylammonium-tetrakispentafluorophenylborate and $Ph_3CB(PhF_5)_4$ and analogues therefore are especially favoured.

It is especially preferred the combination of aborate cocatalyst, like Trityl tetrakis(pentafluorophenyl) borate, and methylaluminoxane (MAO).

Suitable amounts of cocatalyst will be well known to the skilled man. The molar ratio of boron to the metal ion of the metallocene may be in the range of 0.5:1 to 10:1 mol/mol, preferably in the range of 1:1 to 10:1, especially in the range 20 of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably, the support is a porous material so that the complex may be loaded into the pores of the support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methyl aluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed. In order to provide the catalyst in solid form but without using an external carrier, it is preferred if a liquid/liquid emulsion system is used. Full disclosure of the necessary process can be found in WO 03/051934 A1.

The most preferred catalyst system is defined in the example section below (single site catalyst system 1 (SSCS1)).

The polymerization conditions in the sequential polymerization of polypropylene are well known to the skilled

person. The prepolymerization may be carried out in any type of continuously operating polymerization reactor. The prepolymerization may be carried out in a slurry polymerization or a gas phase polymerization reactor, preferably in a loop prepolymerization reactor.

In a preferred embodiment, the prepolymerization is conducted as bulk slurry polymerization in liquid propylene, i.e. the liquid phase mainly comprises propylene, with minor amount of other reactants and optionally inert components dissolved therein. The prepolymerization is carried out in a continuously operating reactor at an average residence time of 5 minutes up to 90 min. Preferably the average residence time is within the range of 10 to 60 minutes and more preferably within the range of 15 to 45 minutes. The prepolymerization reaction is typically conducted at a temperature of 0 to 50 °C, preferably from 10 to 45 °C, and more preferably from 15 to 35 °C.

The pressure in the prepolymerization reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar. In case a prepolymerization step is performed, all of the catalyst mixture is introduced to the prepolymerization step. The precise control of the prepolymerization conditions and reaction parameters is within the skill of the art.

Following prepolymerization, a first propylene polymer fraction (R1) is preferably produced in a slurry phase polymerization step, i.e. in the liquid phase. The temperature in the slurry polymerization is typically from 50 to 110 °C, preferably from 55 to 100°C and in particular from 60 to 90 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. Loop reactors are generally known in the art and examples are given, for instance, in US-A-4582816, US-A-3405109, US-A-3324093, EP-A-479186 and US-30 A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The reaction product of the slurry phase polymerization, i.e. the first propylene polymer fraction (R1), which preferably is carried out in a loop reactor, is then transferred to the subsequent gas phase reactor in which the second propylene polymer fraction (R2) is produced.

The polymerization in gas phase may be conducted in fluidized bed reactors, in fast fluidized bed reactors or in settled bed reactors or in any combination of these. When a combination of reactors is used then the polymer is transferred from one polymerization reactor to another. However, it is preferred that the second propylene polymer fraction (R2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar.

Accordingly, the first propylene polymer fraction (R1) is produced in the first step, i.e. in a first reactor, e.g. the loop reactor, whereas the second propylene copolymer fraction (R2) is produced in the subsequent step, i.e. in the second reactor, e.g. the gas phase reactor. In case the polymerization process of the first propylene polymer fraction (R1) and the second propylene polymer fraction (R2) contains also a prepolymerization step, then the first propylene polymer fraction (R1) is the polymer produced in the prepolymerization together with the polymer produced in the subsequent first step, in the first reactor, e.g. the loop reactor, whereas the second propylene polymer fraction (R2) is the product of the second reactor, e.g. the gas phase reactor. The amount of polymer produced in the prepolymerization step is comparatively small compared to the quantities produced in the first reactor and therefore has no great influence on the properties of the propylene polymer from the first reactor.

## Second Polypropylene homopolymer (PPH-2)

As mentioned, the at least one second polypropylene homopolymer PPH-2 has a $MFR_2$ (ISO1133, 2.16 kg load at 230 °C) between 0.5 and 20 g/10 min. In an embodiment, the at least one second polypropylene homopolymer (PPH-2) has an $MFR_2$ (ISO1133, 2.16 kg load at 230 °C) between 1.0 and 15.0 g/ 10min, preferably between 1.5 and 12.0 g/10 min, more preferably between 2.0 and 10.0 g/10 min such as between 3.0 and 9.0 g/10 min, in particular between 5.0 and 9.0 g/10 min, more in particular between 7.0 and 9.0 g/10 min..

The polypropylene homopolymer PPH-2 preferably has a molecular weight distribution Mw/Mn (measured by GPC according to ISO 16014-4:2003 and ASTM D 6474-99) in the range of 4.0 to 9.0, preferably in the range of 4.3 to 8.0, more preferably in the range of 4.5 to 7.5.

The polypropylene homopolymer PPH-2 preferably also has a weight average molecular weight Mw (measured by GPC according to ISO 16014-4:2003 and ASTM D 6474-99) in a range of 150 to 900 kg/mol, more preferably in a range of 180 to 750 kg/mol, even more preferably in a range of 200 to 650 kg/mol.

The second polypropylene homopolymer PPH-2 has a melting temperature ($T_m$) (measured according to ISO 11357/part 3/method C2) of at least 160 °C, preferably in the range of 160 to 170 °C, more preferably in the range of 162 °C to 168°C.

The second polypropylene homopolymer PPH-2 has a crystallization temperature ($T_c$) (measured according to ISO 11357/part 3/method C2) of at least 120 °C, preferably in the range of 122 to 135°C, more preferably in the range of 124°C to 132°C, even more preferably in the range of 125°C to 130°, such as in the range of 127°C to 129°C.

It is furthermore to be noted, that the at least one second polypropylene homopolymer PPH-2 fulfils European Pharmacopoeia for blister application.

The second polypropylene homopolymer PPH-2 is produced using a Ziegler-Natta-catalyst in a sequential polymerization process using a specific Ziegler-Natta-catalyst , as for example described in EP 2 960 279 A1.

Specifically, polypropylene homopolymer PPH-2 is obtained in a process comprising the steps of:

a) polymerizing propylene in the presence of a modified Ziegler-Natta catalyst, in a first polymerization reactor (R1) and obtaining a first polymerization product;

b) transferring the first polymerization product to a second polymerization reactor (R2) and obtaining a final polymerization product; and

c) optionally, compounding the final polymerization product obtained in step b) with additives.

The Ziegler-Natta catalyst is modified with a polymeric nucleating agent, preferably with a vinyl polymer, and pre-polymerizing propylene in a pre-polymerization reactor.

The Ziegler-Natta catalyst comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail in the experimental section. Thus, the catalyst is in a preferred embodiment fully free of undesired phthalic compounds. Further, the solid catalyst is free of any external support material, like silica or $MgCl_2$, but the catalyst is self-supported.

As mentioned, the Ziegler-Natta catalyst (ZN-C) is preferably modified with a polymeric nucleating agent.

Such a polymeric nucleating agent may be as described above a vinyl polymer, such as a vinyl polymer derived from monomers of the formula

CH2 = CH-CHR1R2

wherein R1 and R2, together with the carbon atom they are attached to, form an optionally substituted saturated or unsaturated or aromatic ring or a fused ring system, wherein the ring or fused ring moiety contains four to 20 carbon atoms, preferably 5 to 12 membered saturated or unsaturated or aromatic ring or a fused ring system or independently represent a linear or branched C4-C30 alkane, C4- C20 cycloalkane or C4-C20 aromatic ring. Preferably R1 and R2, together with the C-atom wherein they are attached to, form a five- or six-membered saturated or unsaturated or aromatic ring or independently represent a lower alkyl group comprising from 1 to 4 carbon atoms. Preferred vinyl compounds for the preparation of a polymeric nucleating agent to be used in accordance with the present invention are in particular vinyl cycloalkanes, in particular vinyl cyclohexane (VCH), vinyl cyclopentane, and vinyl-2-methyl cyclohexane, 3-methyl-1-butene, 3-ethyl-1-hexene, 3-methyl-1-pentene, 4-methyl-1-pentene or mixtures thereof. VCH is a particularly preferred monomer. The weight ratio of vinyl compound to polymerization catalyst in the modification step of the polymerization catalyst preferably is 0.3 or more up to 40, such as 0.4 to 20 or more preferably 0.5 to 15, like 0.5 to 2.0.

The polymerization of the vinyl compound, e. g. VCH, can be done in any inert fluid that does not dissolve the polymer formed (e. g. polyVCH). It is important to make sure that the viscosity of the final catalyst/polymerized vinyl compound/inert fluid mixture is sufficiently high to prevent the catalyst particles from settling during storage and transport.

Details of such a modification and details on the polymerization conditions can further be found in EP 1 183 307, EP 2 960 279 and EP 3 184 587 and in the experimental section.

<u>Additives</u>

As mentioned, the polypropylene composition comprises not more than 5 wt.-% of at least one additive, preferably not more than 4.0 wt.-%, more preferably not more than 3.0 wt.-%, even more preferably of not more than 2.0 wt.-%, still more preferably of not more than 1.0 wt.-% of at least one additive.

Preferably, at least one of the at least one additive is an antioxidant. The amount of said antioxidant in the polypropylene composition may be less than 0.5 wt.-% antioxidants, more in particular less than 0.3 wt.-% antioxidants, even more in particular less than 0.2 wt.-% antioxidants.

Examples of antioxidants which are commonly used in the art, are sterically hindered phenols (such as CAS No. 6683-19-8, also sold as Irganox 1010 FF™ by BASF, or Irganox B 215 FF by BASF), phosphorous based antioxidants

(such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'- bis(1,1'-dimethylbenzyl)diphenylamine), or antioxidant blends. Preferred antioxidants may be Tris (2,4-di-*t*-butylphenyl) phosphite and/or Octadecyl 3-(3',5'-di-tert. butyl-4-hydroxyphenyl)propionate.

Other additives may include acid scavengers such as calcium stearate, magnesium oxide or magnesium/aluminium-hydrotalcite, slip agents such as erucamide and oleamide, antblocking agents such as silica and nucleating agents.

## Experimental Section

The following Examples are included to demonstrate certain aspects and embodiments of the invention as described in the claims. It should be appreciated by those of skill in the art, however, that the following description is illustrative only and should not be taken in any way as a restriction of the invention.

## Test Methods

The following definitions of terms and determination methods apply for the above general description of the invention as well as to the below examples unless otherwise defined.

## Crystallinity by WAXS

The degree of crystallinity of the PP film samples was studied by carrying out WAXS measurements in reflection mode with a Bruker Discover D8 diffractometer equipped with a two-dimensional GADDS detector and a Ni-filtered CuKα X-rays. Three measurements were performed on each sample and the corresponding results were averaged. The amorphous halo obtained from an atactic-PP sample [1] was properly scaled and subtracted and a crystallinity index ($X_c$) was quantified according to:

$$X_c = \frac{A_c}{A_{tot}}$$

where $A_{tot}$ is the area under the total pattern and $A_c$ is the area after subtraction of the amorphous halo (1 - D. Tranchida, L. Resconi L., Influence of 2, 1-erythro regiodefects on the crystallization behavior of isotactic polypropylene, Polymer Crystallization 1 (2018) e10022).

## Melt Flow Rate

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The $MFR_2$ of polypropylene was determined at a temperature of 230 °C and a load of 2.16 kg

**The xylene cold soluble fraction at room temperature (XCS, wt.-%):** The amount of the polymer soluble in xylene was determined at 25 °C according to ISO 16152; 5th edition; 2005-07-01.

**DSC analysis, melting temperature ($T_m$)** and **crystallization temperature ($T_c$):** measured with a TA Instrument Q200 differential scanning calorimetry (DSC) on 5 to 7 mg samples. DSC was run according to ISO 11357 / part 3 / method C2 in a heat / cool / heat cycle with a scan rate of 10 °C/min in the temperature range of -30 to +225 °C. Crystallization temperature ($T_c$) was determined from the cooling step, while melting temperature ($T_m$) and melting enthalpy ($H_m$) were determined from the second heating step.

**Haze** was measured in accordance to ASTM D 1003-00 on the film as described below.

## The tensile properties acc ISO 527-3 (uniaxial tensile test)

The tensile properties (tensile modulus, tensile strength, tensile stain at strength, tensile stress at break, tensile strain at break) were determined acc. ISO 527-3 on 300μm thick cast films in machine direction. The testing temperature was 23±2°C.

**Water vapor transmission rate (WVTR)** was determined at 38°C 90%RH as determined according to ISO 15106-3:2003 on a 300μm cast film.

**Molecular weight distribution**

Molar mass averages (Mw and Mn) and molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum_{i=1}^{N}(A_i/M_i)}$$

$$M_w = \frac{\sum_{i=1}^{N}(A_i\, x\, M_i)}{\sum_{i=1}^{N} A_i}$$

where Ai and Mi are the chromatographic peak slice area and polyolefin molecular weight (MW).

A PolymerChar GPC instrument, equipped with infrared (IR) detector was used with 3 x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours at 160 °C under continuous gentle shaking in the autosampler of the GPC instrument.

**Quantification of microstructure by NMR spectroscopy**

Quantitative nuclear-magnetic resonance (NMR) spectroscopy was used to quantify the 2,1 erythro regio defect content of the polymers.

Quantitative $^{13}C\{^1H\}$ NMR spectra recorded in the solution-state using a Bruker Avance Neo 400MHz NMR spectrometer operating at 400.15 and 100.63 MHz for $^1H$ and $^{13}C$ respectively. All spectra were recorded using a $^{13}C$ optimised 10 mm selective excitation probehead at 125°C using nitrogen gas for all pneumatics. Approximately 200 mg of material was dissolved in *1*,*1*,*2*,*2*-tetrachloroethane-$d_2$ (TCE-$d_2$) using approximately 3 mg of 2,6-di-tert-buthyl-4-methylphenol (CAS 128-37-0) as stabiliser. Standard 90 degree single-pulse excitation was employed utilising the NOE, bi-level WALTZ16 decoupling scheme, relaxation delay of 3 s and 10Hz sample rotation (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 1128). A total of 6144 (6k) transients were acquired per spectra. This setup was chosen primarily for the high resolution needed for tacticity distribution and regio defect quantification (Busico, V., Cipullo, R., Prog. Polym. Sci. 26 (2001) 443; Busico, V., Cipullo, R., Monaco, G., Vacatello, M., Segre, A.L., Macromoleucles 30 (1997) 6251).

$^{13}C\{^1H\}$ NMR spectra were processed, integrated and relevant quantitative properties determined from the integrals using proprietary computer programs. All chemical shifts were internally referenced to the methyl signal of the isotactic pentad mmmm at 21.85 ppm.

The presence of 2,1 erythro regio defects (2,1e) was indicated by the presence of the two methyl sites at 17.6 and 17.2 ppm and confirmed by other characteristic sites (Resconi, L., Cavallo, L., Fait, A., Piemontesi, F., Chem. Rev. 2000, 100, 1253).

The amount of 2,1 erythro regio defects was quantified using the average integral of the two characteristic methyl sites at 17.6 ($I_{e6}$) and 17.2 ($I_{e8}$) ppm:

$$P_{21e} = (\ I_{e6} + I_{e8}\ ) / 2$$

The amount of 1,2 primary inserted propene was quantified based on the methyl region ($I_{CH3}$ 22.5 ppm - 19.8 ppm) with correction undertaken for sites included in this region not related to primary insertion and for primary insertion sites excluded from this region ($P_{12e} = P_{21e}$):

$$P_{12} = I_{CH3} + P_{12e}$$

The total amount of propene was quantified as the sum of primary inserted propene and propene from 2,1 erythro regio defects:

$$P_{total} = P_{12} + P_{21e}$$

The mole percent of 2,1 erythro regio defects was quantified with respect to all propene:

$$[2,1e]\ mol\% = 100 * ( P_{21e} / P_{total} )$$

**Preparation of propylene homopolymer PPH-1**

Catalyst complex

The following metallocene complex has been used as described in WO 2019/179959:

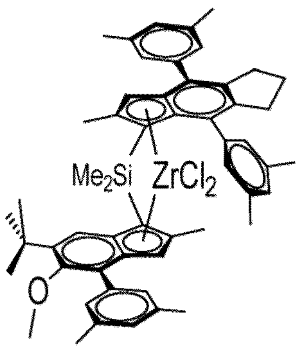

Preparation of MAO-silica support

A steel reactor equipped with a mechanical stirrer and a filternet was flushed with nitrogen and the reactor temperature was set to 20°C. Next silica grade DM-L-303 from AGC Si-Tech Co, pre-calcined at 600°C (5.0 kg) was added from a feeding 10 drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated SiO2 was dried at 60°C under nitrogen flow for 2 hours and then for 5 hours under vacuum (-0.5 barg) with stirring. MAO treated support was collected as a free-flowing white powder found to contain 12.2% Al by weight.

Single site catalyst system 1 preparation **(SSCS1)**

30 wt.-% MAO in toluene (0.7 kg) was added into a steel nitrogen blanked reactor via a burette at 20 °C. Toluene (5.4 kg) was then added under stirring. The metallocene complex as described above (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under N2 flow at 60°C for 2 h and additionally for 5 h under vacuum (-0.5 barg) under stirring. Dried catalyst was sampled in the form of pink free flowing powder containing 13.9% Aland 0.11% Zr.

Polymerization conditions for obtaining the polypropylene homopolymer PPH-1

Table 1 shows the polymerization settings for obtaining the polypropylene homopolymer PPH-1 according to the invention and properties of manufactured of PPH samples manufactured according to said polymerization conditions:

Table 1

| **Catalyst** | | SSc |
|---|---|---|
| **Prepoly reactor** | | |
| Temperature | °C | 20 |
| Cat. Feed rate | g/h | 2.0 |
| Pressure | kPa | 5300 |
| Residence time | min | 24 |
| **Loop reactor (R1)** | | |
| Temperature | °C | 70 |
| Pressure | kPa | 5300 |
| Split | wt.-% | 65 |
| Feed H2/C3 | mol/kmol | 0.13 |
| MFR2 | g/10min | 5.6 |
| **Gas Phase Reactor (R2)** | | |
| Temperature | °C | 85 |
| Pressure | kPa | 2500 |
| Split | wt.-% | 35 |
| H2/C3 | mol/kmol | 1.2 |
| MFR2 (GPR1) | g/10min | 2.8 |
| XCS | wt.-% | 0.34 |
| Mn | g/mol | 94000 |
| Mw | g/mol | 294000 |
| Mw/Mn | | 3.12 |
| [2,1-insertion] | Mol% | 0.8 |
| Tm (DSC) | °C | 154 |
| Tc (DSC) | °C | 114 |
| Tm-Tc | °C | 40 |

**Preparation of propylene homopolymer PPH-2**

The catalyst (ZNC) used for the preparation of the PPH-2 is obtained in analogy to the method as described in EP 2960279.

The polymerization is done on a Borstar pilot plant, with prepolymerization-loop-gas phase reactor setup, i.e. one slurry loop reactor and one gas phase reactor. The solid catalyst was used along with triethyl-aluminum (TEAL) as cocatalyst and dicyclo pentyl dimethoxy silane (D-donor) as donor.

*1a) Catalyst preparation*

3.4 liter of 2-ethylhexanol and 810 ml of propylene glycol butyl monoether ( in a molar ratio 4/1) were added to a 20 l reactor. Then 7.8 liter of a 20 % solution in toluene of BEM (butyl ethyl magnesium) provided by Crompton GmbH was slowly added to the well stirred alcohol mixture. During the addition the temperature was kept at 10 °C. After addition the temperature of the reaction mixture was raised to 60 °C and mixing was continued at this temperature for 30 minutes. Finally, after cooling to room temperature the obtained Mg-alkoxide was transferred to storage vessel.

21.2 g of Mg alkoxide prepared above was mixed with 4,0 ml bis(2-ethylhexyl) citraconate for 5 min. After mixing the obtained Mg complex was used immediately in the preparation of catalyst component.

19.5 ml titanium tetrachloride was placed in a 300 ml reactor equipped with a mechanical stirrer at 25 °C. Mixing speed was adjusted to 170 rpm. 26.0 of Mg-complex prepared above was added within 30 minutes keeping the

temperature at 25 °C . 3.0 ml of Viscoplex 1-254 and 24.0 ml of heptane were added to form an emulsion. Mixing was continued for 30 minutes at 25 °C. Then the reactor temperature was raised to 90 °C within 30 minutes. The reaction mixture was stirred for further 30 minutes at 90°C. Afterwards stirring was stopped and the reaction mixture was allowed to settle for 15 minutes at 90 °C.

The solid material was washed with 100 ml of toluene, with of 30 ml of $TiCl_4$, with 100 ml of toluene and two times with 60 ml of heptane. I ml of donor was added to the two first washings. Washings were made at 80 °C under stirring 30 min with 170 rpm. After stirring was stopped the reaction mixture was allowed to settle for 20-30 minutes and followed by siphoning.

The solid material was washed 5 times: Washings were made at 80 °C under stirring 30 min with 170 rpm. After stirring was stopped the reaction mixture was allowed to settle for 20-30 minutes and followed by siphoning.

Wash 1: Washing was made with a mixture of 100 ml of toluene and 1 ml donor
Wash 2: Washing was made with a mixture of 30 ml of $TiCl_4$ and 1 ml of donor.
Wash 3: Washing was made with 100 ml toluene.
Wash 4: Washing was made with 60 ml of heptane.
Wash 5. Washing was made with 60 ml of heptane under 10 minutes stirring.

Afterwards stirring was stopped and the reaction mixture was allowed to settle for 10 minutes decreasing the temperature to 70 °C with subsequent siphoning, and followed by $N_2$ sparging for 20 minutes to yield an air sensitive powder.

*1b) VCH modification of catalyst*

35 ml of mineral oil (Paraffinum Liquidum PL68) was added to a 125 ml stainless steel reactor followed by 0.82 g of triethyl aluminium (TEAL) and 0.33 g of dicyclopentyl dimethoxy silane (donor D) under inert conditions at room temperature. After 10 minutes 5.0 g of the catalyst prepared in 1a (Ti content 1.4 wt.-%) was added and after additionally 20 minutes 5.0 g of vinylcyclohexane (VCH) was added.The temperature was increased to 60 °C during 30 minutes and was kept there for 20 hours. Finally, the temperature was decreased to 20 °C and the concentration of unreacted VCH in the oil/catalyst mixture was analysed and was found to be 120 ppm weight.

The details of polymerization conditions for obtaining PPH-2 are shown in Table 2.

Table 2: polymerization conditions for obtaining PPH-2

| **Catalyst** | | ZNC |
|---|---|---|
| **Prepoly reactor** | | |
| Temperature | °C | 30 |
| TEAL | g /t C3 | 135 |
| Donor | g /t C3 | 15 |
| Pressure | kPa | 5300 |
| Residence time | min | 21,6 |
| **Loop reactor (R1)** | | |
| Temperature | °C | 80 |
| Pressure | kPa | 5300 |
| Split | wt.-% | 52 |
| Feed H2/C3 | mol/kmol | 0,78 |
| Feed C2/C3 | mol/kmol | 1,1 |
| C2 | wt.-% | 0,35 |
| MFR2 | g/10min | 4,2 |
| **Gas Phase Reactor (R2)** | | |
| Temperature | °C | 80 |
| Pressure | kPa | 2380 |

(continued)

| Gas Phase Reactor (R2) | | |
|---|---|---|
| Split | wt.-% | 48 |
| H2/C3 | mol/kmol | 8,1 |
| C2/C3 | mol/kmol | 2,6 |
| MFR2 (GPR1) | g/10min | 3,9 |
| C2 | wt.-% | 0,39 |
| XCS | wt.-% | 2 |

The PPH-2 powder (described in Table 2) is mixed with 375 ppm of Irganox 1010 (BASF), 375 ppm of Irgafos 168 (BASF), 300 ppm of DHT-4V (Kisuma ) and 150 ppm of **Trigonox® 101** (Nouryon) were compounded on a ZSK 18 twin screw extruder, with melt temperature of 205 °C, production rate of 7 kg/h.

The final Properties of PPH-2 are summarized in Table **3**

**Table 3:** properties of PPH-2.

| Grade | MFR / g/10min | XCS / wt.-% | Tm(DSC) / °C | Tc(DSC) / °C | Tm-Tc / °C |
|---|---|---|---|---|---|
| PPH-2 | 8.0 | 2.3 | 164 | 128 | 44 |

Polyolefin composition for obtaining the cast film

PPH-1 is mixed the additivated PPH-2 and with 0.125 wt.-% Irganox B 215 FF and 0.04 wt.-% Ceasit Fl.

Table 4 shows the basic polymer properties of an inventive example and a comparative example.

Inventive example IE1: The polypropylene homopolymer PPH-1 (homopolymer polymerized on SSc catalyst ) was mixed with 2 wt.-% of polypropylene homopolymer PPH-2 (homopolymeron a catalyst modified with a polymeric nucleating agent.) and antioxidants (0.125 wt.-% Irganox B 215 FF and 0.04 wt.-% Ceasit FI)

Comparative Example CE1: a polypropylene homopolymer (MFR2 2.8 g/10 min, Tm 164 °C, (polymerized on ZN catalyst (non-phthalate Sirius ZNPP, as described in WO/2016/066446 A1,) was mixed with antioxidants (0.125 wt.-% Irganox B 215 FF and 0.04 wt.-% Ceasit FI).

Table 4: polymer properties of the inventive example and a comparative example

| Grade | MFR / g/10min | XCS / wt.-% | Tm(DSC) / °C | Tc(DSC) / °C | Tm-Tc / °C |
|---|---|---|---|---|---|
| CE1 | 2.8 | 3.0 | 163 | 116 | 47 |
| IE1 | 3.5 | 0.4 | 156 | 123 | 33 |

Cast film

In order to compare the performance for the target application, cast sheets with a thickness of 300 μm were produced at a customer with the steel-belt technology. This technology consists of cooling one side of the film with a chillroll, as in cast technology, and the other side of the film with a steel-belt. The temperature of chillroll and steel-belt was 15°C.

The tensile properties of the films were then analysed according to ISO 527-3, the optical properties (haze) according to ASTM D1003, the crystallinity via Wide-Angle X-ray Scattering and the WVTR at 38°C 90% relative humidity (RH) according to ISO 15106-3.

The thermoforming trial was performed on an Uhlmann B1440 thermoforming machine with the 146/0099 1 R/1T cavity design (diameter 16.7 mm, depth 11.97 mm, tilt angle of cavity wall 5°). The following parameters were kept constant during the thermoforming part:

- Line speed 9 m/min, 45 cycles/min, 360 blisters/min.
- Forming time 600 ms.
- Forming mold temperature 18 °C, cooled with air.
- Plug assist temperature 145 °C.

- Plug assist depth 8 mm.

The lowest forming window is defined as the temperature below which the formed cavities show inhomogeneous distribution of the thickness in the wall and in the bottom of the cavity. The highest forming window is defined as the temperature above which the film is molten through or heavily deformed due to the vicinity to the melting point of the material.

The sealing was made by using a pre-heating roll set at the same temperature as the sealing roll. The temperature was varied in order to find the lowest temperature at which a blue methylene test was passed. The test consists of: i) immersion of 10 blister samples in a blue methylene bath, ii) application of 500 mbar pressure for 2 min, iii) application of atmospheric pressure for 1 min, iv) removal of the blister packages from the methylene bath. The criteria to pass the test is the total absence of any failure, which is detected as infiltration of blue methylene liquid inside the cavities. The employed lid film was the PP lid 80 talk UV V1024.05 produced by Südpack Medica.

As shown in Table 5, the inventive composition IE1 has a 15% higher crystallinity compared to the comparative example CE1. Despite the different crystallinity, the tensile modulus of the two films CE1 and IE1 is very similar and the haze of IE1 is still below 20%, which is the highest accepted haze value for blister films before thermoforming. The higher crystallinity of IE1, combined with a ~10 times lower XCS (see Table 6), determines a 13% lower (beneficial) WVTR for IE1 compared to CE1.

As shown in Table 5, the thermoforming window for IE1 is only 2 °C narrower than for CE1, which is due to the higher crystallinity of IE1, but it starts at the same temperature as CE1. However, the lowest temperature at which the blue methylene test was passed for IE1 is 4 °C lower than for CE1. This results in a broader sealing window for the combination of IE1 as blister film and the PP-based lid film.

In conclusion, when compared to CE1, IE1 shows better water barrier properties while keeping good optics, lower sealing initiation temperature and an acceptable width of the thermoforming window.

Table 5: Properties and Thermoforming behaviour of comparative example CE1 and inventive example IE1.

| Property | Unit | CE1 | IE1 |
|---|---|---|---|
| Tensile modulus | MPa | 1121 | 1152 |
| Haze | % | 12 | 17 |
| Crystallinity | % | 55 | 63 |
| WVTR 38°C 90%RH | $g/m^2$ day | 0.68 | 0.59 |
| Lowest forming temperature | °C | 136 | 136 |
| Highest forming temperature | °C | 146 | 144 |
| Forming window | °C | 11 | 9 |
| Lowest sealing temperature | °C | 145 | 141 |

## Claims

**1.** Cast film consisting of a polypropylene composition comprising

a) at least 90 wt.-% (based on the overall weight of the polyolefin composition) of at least one first polypropylene homopolymer (PPH-1) having

a molecular weight distribution index Mw/Mn measured by GPC (according to ISO 16014-4:2003 and ASTM D 6474-99) in the range of 2.0 to 5.0,
a $MFR_2$ (ISO1133, 2.16 kg load at 230 °C) between 1.0 and 15g/10 min,
a sum of 2,1-insertion or 2,1-erythro-regio defect in the range of 0.3 to 1.5 mol% as determined by $^{13}C$ nuclear magnetic resonance (NMR) spectroscopy

b) 0.1 - 10 wt.-% (based on the overall weight of the polyolefin composition) of at least one second polypropylene (PPH-2) having

a $MFR_2$ (ISO1133, 2.16 kg load at 230 °C) between 0.5and 20 g/10 min,
a melting point determined by differential scanning calorimetry (DSC, ISO ISO 11357 / part 3 / method C2) of

at least 160 °C and a crystallization point (DSC) of at least 120°C,

c) optionally at least one additive, wherein the sum of all ingredients always adds up to 100 wt.-%.

**2.** Cast film according to claim 1, **characterized in that** the polypropylene composition comprises

a) at least 92 wt.-% based (based on the overall weight of the polyolefin composition), preferably at least 95 wt.-%, more preferably at least 97 wt.-% of at least one polypropylene homopolymer (PPH-1),
b) 0.2- 8 wt.-%, preferably 0.3 - 5.0 wt.-%, more preferably 0.5-3.0 wt.-% (based on the overall weight of the polyolefin composition) of at least one second polypropylene (PPH-2), and
c) optionally at least one additive, wherein the sum of all ingredients always adds up to 100 wt.-%,

**3.** Cast film according to one of the preceding claims, **characterized in that** the polypropylene composition has an $MFR_2$ (ISO1133, 2.16 kg load at 230 °C) between 1.0 and 15 g/10 min; preferably between 1.5 and 10 g/10 min, more preferably between 1.8 and 8 g/ 10min, still more preferably between 2.0 and 6.0 g/10 min, even still more preferably between 2.5 and 5.0 g/10 min.

**4.** Cast film according to one of the preceding claims, **characterized in that** the polypropylene composition has a xylene cold soluble (XCS) content determined according to ISO 16152 at 25°C based on the overall weight of polypropylene composition of less than 2.5 wt.-%, preferably of less than 2.0 wt.-%, more preferably of less than 1.5 wt.-%, in particular in the range of 0.1 to 2.4 wt.-%; preferably in the range of 0.2 to 2.0 wt.-%, more preferably in the range of 0.2 to 1.5 wt.-%, more preferably in the range of 0.2 to 1.0 wt.-%.

**5.** Cast film according to one of the preceding claims, **characterized in that** the polypropylene composition has a melting temperature ($T_m$) (measured according to ISO 11357/part 3/method C2) in the range of 150 °C to 165 °C, preferably in the range of 153 °C to 162 °C, more preferably in the range of 154 °C to 160 °C.

**6.** Cast film according to one of the preceding claims, **characterized in that** the polypropylene composition has a crystallization temperature ($T_C$) (measured according to ISO 11357/part 3/method C2) in the range of 118 °C to 135°C, preferably in the range of 120°C to 130°C, more preferably in the range of 120°C to 125°C.

**7.** Cast film according to one of the preceding claims, **characterized by** a thermoforming window in a range of 5 to 20 °C, preferably in a range of 7 to 18°C, more preferably in a range of 8 to 15°C.

**8.** Cast film according to one of the preceding claims, **characterized by** a haze (measured according to ASTM D 1003-00) in a range 8 to 28%, preferably in a range of 10 to 25%, more preferably in a range of 15 to 22 %, even more preferably in a range of 16 to 20%..

**9.** Cast film according to one of the preceding claims, **characterized by** a crystallinity (as determined on 300 μm cast film by wide angle X-ray Scattering measurement (WAXS) as provided in the description) in a range of 45 to 75%, preferably in a range of 50 to 70%, more preferably in a range of more than 55 to 68%, even more preferably in a range of 58 to 67%.

**10.** Cast film according to one of the preceding claims, **characterized by** a water vapor transmission rate (WVTR, at 38°C 90%RH as determined according to ISO 15106-3:2003 on a 300μm cast film) of less than 0.68 $g/m^2$ day, preferably of less than 0.65 $g/m^2$ day, more preferably of less than 0.63 $g/m^2$ day, in particular in a range of 0.30 to <0.68 $g/m^2$ day, more particular in a range of 0.35 to < 0.63 $g/m^2$ day, even more particular in a range of 0.40 to < 0.63 $g/m^2$, still more particular in a range of 0.45 to < 0.63 $g/m^2$, such as in a range of 0.50 to 0.60 $g/m^2$, particular from 0.57 to 0.60 $g/m^2$ day..

**11.** Cast film according to one of the preceding claims, **characterized in that** the at least one first polypropylene homopolymer (PPH-1) has an $MFR_2$ (ISO1133, 2.16 kg load at 230 °C) between 1.5 and 12.0 g/ 10min, preferably between 2.0 and 10.0 g/10 min, more preferably between 2.5 and 6.0 g/10 min, even more preferably between 2.5 and 4.5 g/10 min.

**12.** Cast film according to one of the preceding claims, **characterized in that** the at least one first polypropylene homopolymer (PPH-1) has a molecular weight distribution Mw/Mn measured by GPC according to ISO 16014-4:2003 and ASTM D 6474-99 in the range

of 2.2 to 4.5, preferably in the range of 2.3 to 4.3, more preferably in the range of 2.5 to 4.0, even more preferably in the range of 2.8 to 3.5, still more preferably in the range of 3.0 to 3.5.

**13.** Cast film according to one of the preceding claims, **characterized in that** the at least one second polypropylene homopolymer (PPH-2) has an $MFR_2$ (ISO1133, 2.16 kg load at 230 °C) between 1.0 and 15 g/ 10min, preferably between 1.5 and 12 g/10 min, more preferably between 2.0 and 10 g/10 min such as between 3.0 and 9.0 g/10 min, particular between 5.0 and 9.0 g/10 min, more in particular between 7.0 and 9.0 g/10 min.

**14.** Cast film according to one of the preceding claims, **characterized in that** the at least one second polypropylene homopolymer (PPH-2) has a melting temperature ($T_m$) (measured according to ISO 11357/part 3/method C2) in the range of 160 to 170 °C, preferably in the range of 162 °C to 168°C.

**15.** Use of a cast film according to one of the preceding claims in pharmaceutical packaging systems, in particular tablet blisters.

Europäisches Patentamt
European Patent Office
Office européen des brevets

# EUROPEAN SEARCH REPORT

Application Number
EP 24 19 6520

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/104145 A1 (BOREALIS AG [AT]) 28 May 2020 (2020-05-28)<br>* page 1, line 11 - line 15 *<br>* pages 29,31 - page 32 *<br>* example CE2; table 2 *<br>* claims 1,12,14 *<br>----- | 1-3,5-15 | INV.<br>C08L23/12<br>C08F110/06<br>B65D75/00 |
| A | EP 4 335 881 A1 (BOREALIS AG [AT]) 13 March 2024 (2024-03-13)<br>* paragraphs [0116], [0118] *<br>* example IE1; tables 1-2 *<br>* claims 1, 5, 6, 13-14 *<br>* paragraph [0089] *<br>----- | 1-15 | |
| A | WO 2011/080153 A1 (BOREALIS AG [AT]; GLOGER DIETRICH [AT] ET AL.) 7 July 2011 (2011-07-07)<br>* example E1; tables 1-3,5 *<br>* claims 1,4,11 *<br>* page 13, line 1 - line 2 *<br>* page 21, line 7 - line 9 *<br>----- | 1-15 | TECHNICAL FIELDS SEARCHED (IPC) |
| A | EP 3 176 215 A1 (MITSUI CHEMICALS INC [JP]; PRIME POLYMER CO LTD [JP]) 7 June 2017 (2017-06-07)<br>* paragraph [0001] *<br>* comparative examples 8 and 9, table 3 *<br>* paragraph [0187] - paragraph [0208] *<br>* paragraphs [0219], [0224] *<br>* claim 1 *<br>----- | 1-15 | C08L<br>C08F<br>B65D |
| A | WO 2020/011825 A1 (BOREALIS AG [AT]) 16 January 2020 (2020-01-16)<br>* example CE3; table 1 *<br>* page 37, line 20 - line 28 *<br>* page 22, line 11 - line 14 *<br>* page 16, line 20 - line 25 *<br>----- | 1-15 | |

The present search report has been drawn up for all claims

2

| Place of search | Date of completion of the search | Examiner |
|---|---|---|
| Munich | 21 February 2025 | Gamb, Véronique |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 19 6520

This annex lists the patent family members relating to the patent documents cited in the above-mentioned European search report. The members are as contained in the European Patent Office EDP file on
The European Patent Office is in no way liable for these particulars which are merely given for the purpose of information.

21-02-2025

| Patent document cited in search report | Publication date | Patent family member(s) | Publication date |
|---|---|---|---|
| WO 2020104145 A1 | 28-05-2020 | CN 113056508 A | 29-06-2021 |
| | | EP 3883989 A1 | 29-09-2021 |
| | | ES 2977491 T3 | 26-08-2024 |
| | | US 2022017733 A1 | 20-01-2022 |
| | | WO 2020104145 A1 | 28-05-2020 |
| EP 4335881 A1 | 13-03-2024 | EP 4335881 A1 | 13-03-2024 |
| | | WO 2024052569 A1 | 14-03-2024 |
| WO 2011080153 A1 | 07-07-2011 | BR 112012015909 A2 | 21-06-2016 |
| | | CN 102712717 A | 03-10-2012 |
| | | EP 2341086 A1 | 06-07-2011 |
| | | EP 2519550 A1 | 07-11-2012 |
| | | ES 2458928 T3 | 07-05-2014 |
| | | KR 20120108035 A | 04-10-2012 |
| | | KR 20140120378 A | 13-10-2014 |
| | | US 2012329951 A1 | 27-12-2012 |
| | | WO 2011080153 A1 | 07-07-2011 |
| EP 3176215 A1 | 07-06-2017 | CN 106574092 A | 19-04-2017 |
| | | EP 3176215 A1 | 07-06-2017 |
| | | JP 6445561 B2 | 26-12-2018 |
| | | JP WO2016017752 A1 | 01-06-2017 |
| | | KR 20170012349 A | 02-02-2017 |
| | | SG 11201609868T A | 27-02-2017 |
| | | US 2017183488 A1 | 29-06-2017 |
| | | WO 2016017752 A1 | 04-02-2016 |
| WO 2020011825 A1 | 16-01-2020 | BR 112020025207 A2 | 09-03-2021 |
| | | CN 112334532 A | 05-02-2021 |
| | | EP 3820939 A1 | 19-05-2021 |
| | | ES 2982787 T3 | 17-10-2024 |
| | | RU 2754224 C1 | 30-08-2021 |
| | | US 2021253836 A1 | 19-08-2021 |
| | | WO 2020011825 A1 | 16-01-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5249797 B
- WO 2023187145 A1
- WO 2019179959 A1
- WO 2019179959 A
- WO 9414856 A
- WO 9512622 A
- WO 2006097497 A
- WO 03051934 A1
- US 4582816 A
- US 3405109 A
- US 3324093 A
- EP 479186 A
- US 305391654 A
- EP 2960279 A1
- EP 1183307 A
- EP 2960279 A
- EP 3184587 A
- WO 2016066446 A1


### Non-patent literature cited in the description


- *CHEMICAL ABSTRACTS*, 6683-19-8
- *CHEMICAL ABSTRACTS*, 31570-04-4
- *CHEMICAL ABSTRACTS*, 693- 36-7
- **D. TRANCHIDA** ; **L. RESCONI L.** Influence of 2, 1-erythro regiodefects on the crystallization behavior of isotactic polypropylene. *Polymer Crystallization*, 2018, vol. 1, e10022
- *CHEMICAL ABSTRACTS*, 128-37-0
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **BUSICO, V.** ; **CIPULLO, R.** *Prog. Polym. Sci.*, 2001, vol. 26, 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **RESCONI, L.** ; **CAVALLO, L.** ; **FAIT, A.** ; **PIEMONTESI, F.** *Chem. Rev.*, 2000, vol. 100, 1253